# FASCICULE DE BREVET EUROPEEN

(11) **EP 2 029 416 B1**
(45) Date de publication et mention de la délivrance du brevet: **11.08.2010**
(21) Numéro de dépôt: 07845247.1
(22) Date de dépôt: 08.06.2007
(51) Int. Cl.: B62D 29/04, B62D 25/08, B62D 21/11

(54) **PIECE DE STRUCTURE POUR BLOC AVANT DE VEHICULE AUTOMOBILE**
STRUKTURELEMENT FÜR EINE MOTORFAHRZEUG-FRONT-END-BAUGRUPPE
STRUCTURAL PART FOR A MOTOR VEHICLE FRONT END ASSEMBLY

(30) Priorité: 08.06.2006 FR 0652071
(43) Date de publication de la demande: 04.03.2009
(73) Titulaire: Compagnie Plastic Omnium, 69007 Lyon (FR); PEUGEOT CITROËN AUTOMOBILES S.A., 78140 Velizy Villacoublay (FR)
(72) Inventeur: GINJA, Stéphane, F-01500 Amberieu En Bugey (FR)
(74) Mandataire: Thiollier, Clémence-Olivia Laure Marie
(86) Numéro de dépôt international: PCT/FR2007/051401
(87) Numéro de publication internationale: WO 2007/147996

(56) Documents cités:
- EP-A1- 1 038 732
- EP-A1- 1 190 937
- EP-A1- 1 256 510
- WO-A-2006/008137

## Description

### Domaine technique :

La présente invention concerne une pièce de structure pour bloc avant de véhicule automobile.

### Etat de la technique :

On sait qu'un bloc avant doit être suffisamment rigide pour transmettre des efforts reçus par l'extrémité avant du véhicule, afin de diminuer les coûts de réparation du véhicule en cas de petit choc. Les efforts reçus sont transmis à l'avant de la caisse en blanc du véhicule dans leur plus grande partie par lintermédiaire d'une voie haute de transmission, comprenant la poutre de chocs et l'avant des longerons principaux auxquels elle est raccordée. La caisse en blanc désigne la structure du véhicule comprenant les longerons, le tablier, le plancher, le pavillon et ses montants, l'extension avant supportant le moteur et les trains roulants, comprenant notamment le berceau moteur. Le berceau moteur désigne une pièce structurelle qui supporte le moteur et éventuellement d'autres éléments du bloc moteur du véhicule.

Par exemple, le document EP 1 038 732 décrit une pièce de structure selon le préambule de la revendication 1

Une partie des efforts reçus par l'extrémité avant peut en outre être transmise à la caisse en blanc par l'intermédiaire d'une voie basse de transmission, comprenant une pièce de structure agencée en dessous des longerons. Cette pièce comprend deux prolonges métalliques, appelées « prolonges du berceau », s'étendant sensiblement dans la direction longitudinale depuis le berceau moteur vers l'extrémité avant du véhicule, sensiblement parallèlement aux longerons.

Grâce aux prolonges de berceau, le bloc avant dispose d'une voie basse de transmission d'efforts, qui vient s'ajouter à la voie haute principale. Il en résulte que les efforts sont mieux transmis à la caisse en blanc, et leur transmission est répartie en davantage de points de la caisse en blanc.

Comme ces prolonges de berceau sont utilisées pour transmettre des efforts à la caisse en blanc, elles sont rigides. Lorsque l'effort est très important, par exemple lors d'un choc à haute vitesse, elles sont conçues pour pouvoir flamber, notamment en leur donnant une forme longue et mince, et en intégrant des zones de faiblesse.

On entend par choc à faible vitesse un choc à une vitesse inférieure ou égale a 16 km/h (Kilomètres par heure), notamment un choc « reparabilite », appele encore choc « assurance » ou choc Danner (par exemple, on lance un véhicule à 15km/h contre un mur avec 30% de recouvrement), et par choc à haute vitesse, un choc ayant lieu à plus de 16 km/h. En particulier, pour un véhicule de taille moyenne (de type véhicule du segment C), on considère généralement que le choc assurance correspond à un effort compris entre 20 et 40 kN (kiloNewton). Néanmoins, la valeur de l'effort ou de l'intervalle d'effort correspondant au choc assurance ou au choc à haute vitesse dépend de la taille du véhicule.

### Problème posé par cet état de la technique :

Le bloc avant de l'état de la technique est suffisamment rigide pour transmettre les efforts reçus.

Toutefois, outre les qualités de transmission d'effort, les constructeurs automobiles recherchent un bloc avant capable de se déformer pour absorber le plus d'énergie possible, et ainsi diminuer la quantité d'énergie transmise à la caisse en blanc, afin de préserver les occupants du véhicule.

### Solution proposée par l'invention :

La présente invention vise à répondre à cette préoccupation.

A cet effet, l'invention a pour objet une pièce de structure pour bloc avant de véhicule automobile, **caractérisée en ce qu**'elle comprend majoritairement de la matière plastique et en ce qu'elle comprend un plateau configuré pour s'étendre sensiblement horizontalement depuis un berceau moteur vers l'extrémité avant du véhicule, cette pièce étant capable de transmettre des efforts reçus par l'extrémité avant du véhicule au berceau moteur, sans se déformer lors d'un choc de type assurance. Par « majoritairement », on entend que plus de la moitié du volume de la pièce de structure est réalisée en matière plastique. On inclut dans « matière plastique » les matériaux composites dont la matrice est réalisée en matière plastique. Le volume de métal ou de matière plastique est calculé en divisant la masse de métal ou de matière plastique par sa masse volumique. Ainsi, la pièce de structure peut comporter du métal, mais ce métal est présent en quantité minoritaire. La matière plastique majoritaire est disposée dans la pièce de structure de façon à absorber l'énergie d'un choc à haute vitesse, en se déformant. En revanche, cette matière plastique ne se déforme pas lors d'un choc à faible vitesse, elle remplit uniquement une fonction de transmission d'effort. Cette fonction de rigidité est obtenue par la conformation de la pièce de structure, notamment par la présence de nervures. La fonction d'absorption d'énergie est obtenue par la compression de la pièce de structure sur elle-même sensiblement dans la direction longitudinale du véhicule, au moyen de sa géométrie, des matériaux utilisés et de réseaux de nervures.

Les inventeurs à l'origine de cette invention ont eu l'idée d'utiliser une pièce dont la fonction traditionnelle est structurelle pour en faire une pièce capable d'absorber de l'énergie. Cette pièce possède les mêmes qualités de transmission d'effort que les prolonges de berceau de l'état de la technique, tout en offrant des qualités supplémentaires d'absorption d'énergie, ces propriétés étant générées par la présence majoritaire de matière plastique dans la pièce de structure.

En effet, la pièce de structure est capable de transmettre des efforts au berceau du véhicule, c'est-à-dire qu'elle est particulièrement rigide, suffisamment pour ne pas se déformer à faible vitesse, donc notamment lors d'un choc de type assurance. Ainsi, elle peut servir de cellule rigide pour épargner certaines pièces, ce qui est particulièrement intéressant du point de vue des coûts de réparabilité lors d'un choc à faible vitesse. Cette rigidité de la pièce est accrue par la présence du plateau, qui peut en outre transmettre les efforts reçus lors d'un choc par l'avant du véhicule vers toute la partie transversale du berceau, et non uniquement vers deux points latéraux du berceau.

En outre, le plateau peut servir de cloisonnement du bloc moteur, si bien que l'on rassemble sur une seule pièce une fonction structurelle pour le traitement de chocs et une fonction de protection du bloc moteur.

Parmi les avantages de l'invention, on notera en outre que la pièce de structure permet d'alléger le bloc avant du véhicule, puisque l'utilisation de matière plastique permet d'utiliser moins de métal.

Par ailleurs, l'utilisation de matière plastique autorise une fabrication plus aisée et moins coûteuse de la pièce de structure.

### Modes de réalisation particuliers avantageux :

L'invention peut en outre comporter une ou plusieurs des caractéristiques suivantes :
- La pièce de structure est capable de transmettre au berceau moteur, sans se déformer, un effort supérieur ou égal à une valeur seuil prédéfinie, cette valeur seuil pouvant être comprise entre 20 et 40 kN, par exemple 30 ou 33 kN.
- La pièce de structure est configurée pour se déformer lorsqu'elle subit un choc à haute vitesse. Cette déformation de la pièce, notamment par flambage ou par compression sur elle-méme (ou bottelage) permet d'absorber de l'énergie.
- La pièce de structure comprend deux prolonges s'étendant chacune sensiblement dans la direction longitudinale entre le berceau et l'avant du véhicule. Ces prolonges constituent une voie de transmission supplémentaire des efforts reçus par l'avant du véhicule vers le berceau.
- Le plateau est configuré pour s'étendre transversalement au moins entre la verticale d'un premier longeron supérieur et la verticale d'un second longeron supérieur du véhicule, c'est-à-dire sur quasiment toute la direction transversale du bloc avant du véhicule. Ainsi, ce plateau permet un cloisonnement efficace du bloc moteur. Le cas où la pièce comprend à la fois les prolonges et le plateau est particulièrement intéressant car il permet de transmettre une partie des efforts reçus par les prolonges dans ce plateau, et vice-versa. Ce gain en rigidité encourage l'utilisation de matière plastique à la place du métal.
- Les prolonges et le plateau sont réalisés d'un seul tenant. Le nombre de pièces à monter sur le bloc avant est donc diminué. Par l'assemblage du plateau et des prolonges, les inventeurs à l'origine de cette invention ont eu l'idée de rassembler en une seule pièce deux fonctions assurées auparavant de façon indépendante par des pièces distinctes, à savoir la fonction structurelle des prolonges et la fonction de protection du bloc moteur assurée par un plateau.
- La liaison entre les prolonges et le plateau comporte des moyens de renfort, notamment des nervures. Ces moyens permettent de dissiper davantage les efforts reçus par les prolonges dans le plateau, et vice-versa.
- La pièce de structure est obtenue par moulage, notamment par injection et/ou compression ou par soufflage. Il en ressort que son coût de fabrication et de montage est particulièrement intéressant. En particulier, on peut intégrer, notamment par surmoulage, des éléments de fixation de la pièce de structure avec d'autres éléments du véhicule.
- La pièce de structure est intégralement réalisée dans un matériau non métallique, ce qui fournit une pièce encore plus légère et de fabrication particulièrement aisée.
- La pièce de structure comprend des moyens de rigidification tels que des nervures ou un insert métallique. En particulier, un insert métallique peut servir à la fixation d'un élément sur la pièce de structure. En outre, des moyens de rigidifications peuvent compenser l'absence éventuelle de prolonges. On notera que des rigidifications s'étendant transversalement autorisent un report d'effort du côté opposé à un choc.
- La pièce de structure comprend des moyens de fixation au berceau moteur. Elle est donc directement montée sur ce berceau.
- La pièce de structure est apte à servir d'appui pour un absorbeur de chocs inférieur, destiné à traiter des chocs piéton et/ou des chocs de type assurance, en particulier comprenant une platine d'appui d'un absorbeur. Dans ce cas, l'absorbeur de chocs assurance a pour fonction d'absorber l'énergie d'un choc assurance par déformation, si bien que la pièce de structure ne se déforme pas et qu'il n'est donc pas nécessaire de la remplacer à la suite de ce type de choc. Cet absorbeur de chocs assurance peut prendre la forme de crash boxes disposées en appui sur les éventuelles prolonges. L'absorbeur de chocs assurance peut, en plus ou à la place des crash boxes, prendre la forme d'une poutre d'absorption transversale, cette poutre étant en appui contre les crash boxes ou en appui contre tout le plateau. Dans le cas d'un absorbeur de chocs piéton, l'absorbeur se présente de préférence sous forme d'une poutre transversale inférieure, agencée à hauteur du tibia d'un piéton, destinée à mettre en mouvement la jambe en cas de choc piéton. Les platines sont de préférence réalisées d'un seul tenant avec l'extrémité avant de chacune des prolonges.
- La pièce comprend des moyens de fixation à l'absorbeur de choc inférieur.
- La pièce de structure intègre des organes fonctionnels choisis parmi des moyens d'isolation thermique, acoustique ou chimique, des moyens anti-gravillonnage, une trappe d'accès au moteur, un conduit d'air, un convergent inférieur du véhicule, un logement de réception de câblages de frein. Ainsi, comme la pièce de structure comprend de la matière plastique, il est facile, en prévoyant des logements spécifiques ou des moyens de fixation spécifique, ou bien par surmoulage, d'équiper la pièce de structure d'organes fonctionnels habituellement agencés sous un moteur. Il en ressort que l'on peut monter ces organes fonctionnels sur la pièce de structure hors de la chaîne de montage, de façon à fournir un module pré-équipé à monter sur le bloc avant, ce qui permet de gagner du temps lors de l'assemblage du véhicule tout en simplifiant cet assemblage. En outre, la pièce ne se déformant pas en cas de choc assurance, ces organes fonctionnels restent intacts.

### Description d'exemples :

Un exemple de pièce de structure selon l'invention est illustré en se référant aux figures qui ne présentent aucun caractère limitatif, dans lesquelles :
- la figure 1 est une vue en perspective d'une pièce de structure selon un premier mode de réalisation d l'invention ;
- la figure 2 est une vue agrandie d'une prolonge isolée de la pièce de structure de la figure 1 ;
- la figure 3 est une vue similaire à la figure 1, à la suite d'un choc de type assurance ;
- la figure 4 est une vue similaire à la figure 1, à la suite d'un choc à haute vitesse ;
- la figure 5 est une vue en perspective d'une pièce selon un deuxième mode de réalisation de l'invention.

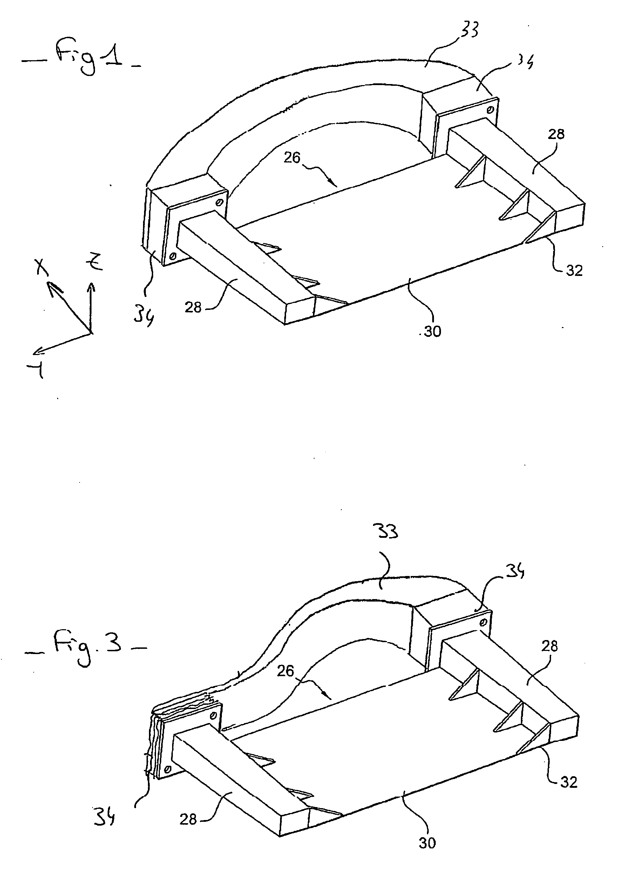

La pièce de structure 26 représentée sur la figure 1 comprend un plateau 30 configuré pour s'étendre sensiblement horizontalement depuis un berceau moteur vers l'extrémité avant d'un véhicule. Ce plateau 30 s'étend dans la direction transversale Y au moins entre la verticale d'un premier longeron supérieur (ou principal) et la verticale d'un second longeron supérieur (ou principal) du véhicule, c'est-à-dire sur quasiment toute la direction transversale du bloc avant du véhicule, et a notamment une fonction de cloisonnement du bloc moteur du véhicule. La pièce de structure 26 comporte en outre deux prolonges 28 s'étendant chacune sensiblement dans la direction longitudinale X du véhicule, entre le berceau et l'avant du véhicule, en étant néanmoins légèrement plus écartées du côté de l'avant que du côté du berceau.

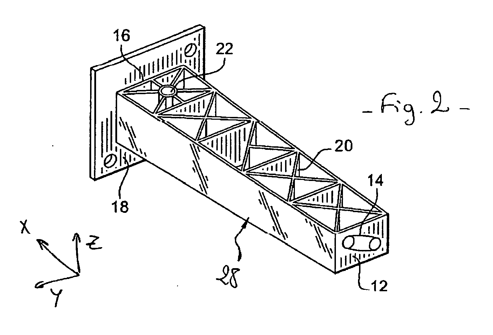

Comme on peut le voir sur la figure 2, la prolonge 28 comprend une extrémité arrière 12, destinée à être fixée au berceau moteur de véhicule par l'intermédiaire de pions d'indexage 14, et une extrémité avant 16, comprenant une platine 18 surmoulée ou venue de moulage. Cette platine 18 sert d'appui à un absorbeur de chocs, comme on le verra dans la suite.

La prolonge 28 est réalisée en matière plastique, elle comporte des nervures 20 de rigidification, ainsi qu'un insert métallique 22 surmoulé, tel qu'un écrou fileté, servant par exemple pour la fixation d'une traverse inférieure. Comme on peut le constater sur la figure, le volume de l'Insert métallique est relativement faible à côté du volume de matière plastique utilisée pour fabriquer la prolonge 28.

Les deux prolonges 28 sont de préférence réalisées d'un seul tenant avec le plateau 30, par injection-compression ou soufflage. La liaison entre le plateau 30 et la prolonge 28 peut être renforcée grâce à des moyens de rigidification tels que des nervures 32.

Le plateau 30 peut intégrer un ou plusieurs organes fonctionnels non représentés, de façon à exercer la fonction d'isolation thermique, acoustique ou chimique, de protection contre des gravillons, d'accès au moteur par l'intermédiaire d'une trappe, de guidage d'air, de réception de câblages de freins, etc. Pour intégrer ces différentes fonctions, on peut surmouler des inserts, par exemple des fibres de polyester pour la protection acoustique, une âme métallique ou en matériau composite de type SMC pour que la pièce de structure 26 soit davantage stable lors d'un choc à haute vitesse afin de favoriser l'absorption d'énergie, une plaque en aluminium ou en matériau composite de type SMC pour la protection thermique.

Comme on peut le voir sur la figure 1, la pièce de structure 26 sert d'appui pour un absorbeur de chocs inférieur, comprenant deux crash boxes 34, en appui contre les platines 18, sur lesquelles elles sont fixées par des moyens de fixation, et une poutre transversale d'absorption 33, en appui sur chacune des crash boxes 34. On notera que ia poutre d'absorption 33 peut servir à l'absorption de choc de type assurance et/ou à l'absorption en tant qu'appui bas destiné à traiter le choc piéton.

Comme on peut le voir sur la figure 3, en cas de choc assurance contre le côté avant gauche du véhicule, la poutre d'absorption 33, ainsi que la crash boxe 34 située du côté du choc, sont déformées par compression contre la platine 18. Cette déformation absorbe l'énergie du choc. Une partie du choc peut également être absorbée par flexion de la poutre 33. Comme on peut le constater sur la figure 3, la pièce structurelle 26, à savoir le plateau 30 et les prolonge 28, demeure intacte au cours d'un tel choc assurance, si bien que l'on ne doit remplacer que les absorbeur 33, 34. Le choc assurance correspond ici à un choc au cours duquel le véhicule est lancé à 15 km/h contre un mur à 30% de recouvrement. On peut définir une valeur seuil S d'effort, en-dessous de laquelle la pièce de structure 26 ne se déformera pas. Ainsi, la pièce 26 est configurée pour ne pas se déformer lorsqu'elle transmet au berceau un effort inférieur ou égal à cette valeur S. Dans l'exemple, correspondant à un véhicule de taille moyenne, la valeur S est comprise entre 20 et 40 kN, et est égale en l'occurrence à 30 ou 33 kN.

A la suite d'un choc à haute vitesse, en revanche, la pièce de structure 26 est dégradée, en particulier par la déformation de la prolonge 28 qui flambe ou se comprime sur elle-même (par bottelage) en absorbant de l'énergie. On notera que la déformation par compression de la pièce sur elle-même permet une meilleure absorption d'énergie. Cette déformation a lieu pour un effort supérieur à la valeur seuil S.

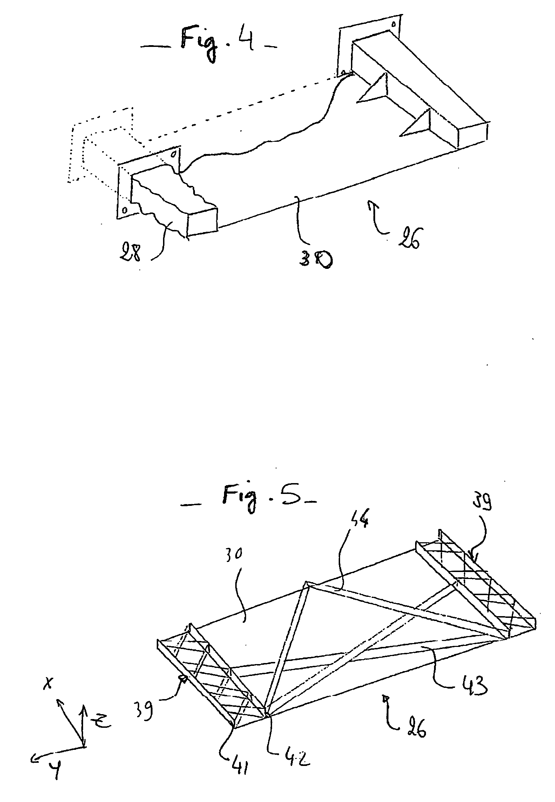

Selon un autre mode de réalisation représenté sur la figure 5, la pièce structurelle 26 ne comporte pas précisément des prolonges 28 mais un plateau 30 comportant des moyens de rigidification 39 disposés sur les deux extrémités latérales du plateau 30, en dessous des longerons supérieurs du véhicule (non représentés), ces rigidification prenant la forme de réseau de nervures 39, remplaçant les prolonges de berceau. Le réseau de nervure 39 n'est pas forcément régulier, et les deux faces latérales 41, 42 s'étendant principalement dans la direction longitudinale du véhicule ne sont pas forcément parallèles.

La pièce de structure 36 comporte en outre des rigidifications centrales 43, 44, ayant pour fonction de renforcer le plateau 30, afin de lui apporter une certaine rigidité statique ainsi qu'un bon comportement contre les vibrations. Les rigidifications 43, 44 ont également pour fonction de reporter l'effort subit par un côté du plateau 30 vers un autre côté, opposé au choc.

On notera que l'invention n'est pas limitée aux modes de réalisations précédemment décrits.

En particulier, on peut envisager qu'une poutre inférieure d'absorption soit en appui sur tout le bord transversal avant du plateau 30, ce qui peut permettre d'absorber plus facilement l'énergie d'un choc assurance. En outre, le plateau 30 peut être combiné à des prolonges 28 ou être renforcé sur ces côtés latéraux 39, agencés en dessous des longerons supérieurs des véhicules, mais pourrait également être rigidifié de façon uniforme sur toute sa surface, de façon à répartir la transmission d'effort le long du bord transversal du berceau.

Bien entendu, les caractéristiques des différents mode de réalisation peuvent se combiner.

## Revendications

1. Pièce de structure (10 ; 26) pour bloc avant de véhicule automobile, comprenant majoritairement de la matière plastique et comprenant un plateau (30) configuré pour s'étendre sensiblement horizontalement depuis un berceau moteur vers l'extrémité avant du véhicule, deux prolonges (28) s'étendant chacune sensiblement dans la direction longitudinale (x) entre le berceau et l'avant du véhicule characterisé en ce qu'elle comprend des moyens de rigification comprenant des nervures (43) s'étendant diagonalement depuis ure prolonge vers l'autre pour renforcer le plateau (30) cette pièce étant capable de transmettre des efforts reçus par l'extrémité avant du véhicule au berceau moteur, sans se déformer lors d'un choc de type assurance, correspondant à un choc à une vitesse inférieure ou égale à 16 km/h.

2. Pièce de structure selon la revendication 1, capable de transmettre au berceau moteur, sans se déformer, un effort supérieur ou égal à une valeur seuil (S) prédéfinie, cette valeur seuil pouvant être comprise entre 20 et 40 kN, par exemple 30 ou 33 kN.

3. Pièce de structure selon la revendication 1 ou 2, apte à se déformer lorsqu'elle subit un choc à haute vitesse.

4. Pièce de structure (10 ; 26) selon l'une quelconque des revendications 1 à 3, dans laquelle une nervure (43) s'étend directement d'une zone arrière de l'une des prolonges vers une zone médiane de l'autre prolonge.

5. Pièce de structure (26) selon la revendication 4, dans laquelle les prolonges (28) et le plateau (30) sont réalisés d'un seul tenant.

6. Pièce de structure (26) selon la revendication 5, dans laquelle la liaison entre les prolonges (28) et le plateau (30) comporte des moyens de renfort, notamment des nervures (32).

7. Pièce de structure selon l'une quelconque des revendications 1 à 6, obtenue par moulage.

8. Pièce de structure (10 ; 26) selon l'une quelconque des revendications 1 à 7, comprenant des moyens de rigidification tels que des nervures (20) ou un insert métallique (22).

9. Pièce de structure selon l'une quelconque des revendications 1 à 8, comprenant des moyens de fixation (14) au berceau moteur.

10. Pièce de structure selon l'une quelconque des revendications 1 à 9, apte à servir d'appui pour un absorbeur de chocs inférieur, destiné à traiter des chocs piéton et/ou des chocs de type assurance, en particulier comprenant une platine d'appui d'un absorbeur.

11. Pièce de structure selon l'une quelconque des revendications 1 à 11, intégrant des organes fonctionnels choisis parmi des moyens d'isolation thermique, acoustique ou chimique, des moyens anti-gravillonnage, une trappe d'accès au moteur, un conduit d'air, 35 un convergent inférieur du véhicule, un logement de réception de câblages de frein.

12. Ensemble d'une pièce de structure selon l'une quelconque des revendications précédentes, d'un absorbeur de chocs inférieurs comprenant deux crash boxes (34), en appui contre des platines (18) sur lesquelles elles sont fixées par des moyens de fixation, et d'une poutre transversale d'absorption (33), en appui sur chacune des crash-boxes, (33), la pièce de structure servant d'appui pour l'absorbeur de chocs inférieurs

## Claims

1. A structural part (10; 26) for a motor vehicle front unit, mostly made of plastics material and comprising a tray (30) configured to extend substantially horizontally from an engine cradle towards the front end of the vehicle, and two extensions (28), each extending substantially in the longitudinal direction (X) between the cradle and the front of the vehicle, the structural part being **characterized in that** it further comprises stiffener means comprising ribs (43) extending diagonally from one extension towards the other to reinforce the tray (30), said part being capable of transmitting forces received by the front end of the vehicle to the engine cradle without deforming during an insurance type impact, corresponding to an impact at a speed less than or equal to 16 km/h.

2. A structural part according to claim 1, capable of transmitting to the engine cradle, without deforming, a force greater than or equal to a predefined threshold value (S), which threshold value may lie in the range 20 kN to 40 kN, e.g. 30 kN or 33 kN.

3. A structural part according to claim 1 or claim 2, suitable for deforming on being subjected to an impact at high speed.

4. A structural part (10; 26) according to any one of claims 1 to 3, wherein a rib (43) extends directly from a rear zone of one of the extensions towards a middle zone of the other extension.

5. A structural part (26) according to claim 4, wherein the extensions (28) and the tray (30) are made as a single piece.

6. A structural part (26) according to claim 5, wherein the connection between the extensions (28) and the tray (30) include reinforcing means, in particular ribs (32).

7. A structural part according to any one of claims 1 to 6, obtained by molding.

8. A structural part (10; 26) according to any one of claims 1 to 7, including stiffener means such as ribs (20) or a metal insert (22).

9. A structural part according to any one of claims 1 to 8, including fastener means (14) for fastening to the engine cradle.

10. A structural part according to any one of claims 1 to 9, suitable for serving as a support for a bottom impact absorber, for handling pedestrian impacts and/or insurance type impacts, and in particular comprising a support plate for an impact absorber.

11. A structural part according to any one of claims 1 to 11, incorporating functional members selected from thermal, acoustic, or chemical installation means, grit-protection means, an engine access hatch, an air duct, a bottom spoiler of the vehicle, a housing for receiving brake cabling.

12. An assembly comprising a structural part according to any preceding claim, a bottom impact absorber comprising two crash boxes (34) bearing against plates (18) to which they are fastened by fastener means, and a transverse absorber beam (33) bearing against each of the crash boxes (33), the structural part serving as a support for the bottom impact absorber.

## Patentansprüche

1. Strukturteil (10; 26) für den Frontblock eines Kraftfahrzeugs, der vorwiegend Kunststoff sowie eine Platte (30) umfasst, die so gestaltet ist, dass sie sich im Wesentlichen waagerecht von einem Motorträger in Richtung des Fahrzeug-Vorderendes hin erstreckt, wobei sich zwei Verlängerungen (28) jeweils im Wesentlichen in der Längsrichtung (X) zwischen dem Motorträger und dem Vorderteil des Fahrzeugs erstrecken, **dadurch gekennzeichnet, dass** es (30) Versteifungsmittel umfasst, welche zur Verstärkung der Platte (30) Rippen (43) umfassen, die sich diagonal von einer Verlängerung zur anderen erstrecken, wobei dieses Teil in der Lage ist, am Fahrzeug-Vorderende einwirkende Kräfte zum Motorträger zu übertragen, ohne sich bei einem Aufprall vom "Versicherungstyp" zu verformen, der einem Aufprall bei einer Geschwindigkeit von 16 km/h oder weniger entspricht.

2. Strukturteil nach Anspruch 1, das in der Lage ist, ohne sich zu verformen zum Motorträger eine Kraft zu übertragen, die höher oder gleich einem vorgegebenen Schwellenwert (S) ist, wobei dieser Schwellenwert zwischen 20 und 40 kN liegen kann, beispielsweise bei 30 oder 33 kN.

3. Strukturteil nach Anspruch 1 oder 2, das sich bei einem Aufprall bei hoher Geschwindigkeit verformen kann.

4. Strukturteil (10; 26) nach einem der Ansprüche 1 bis 3, in dem sich eine Rippe (43) direkt von einem hinteren Bereich einer der Verlängerungen zu einem mittleren Bereich der anderen Verlängerung hin erstreckt.

5. Strukturteil (26) nach Anspruch 4, in dem die Verlängerungen (28) und die Platte (30) aus einem Stück hergestellt werden.

6. Strukturteil (26) nach Anspruch 5, in dem die Verbindung zwischen den Verlängerungen und der Platte (30) Verstärkungsmittel, insbesondere Rippen (32), aufweist.

7. Strukturteil nach einem der Ansprüche 1 bis 6, das durch Formguss erhalten wird.

8. Strukturteil (10; 26) nach einem der Ansprüche 1 bis 7, welches Versteifungsmittel wie beispielsweise Rippen (20) oder ein metallisches Einsatzstück (22) umfasst.

9. Strukturteil nach einem der Ansprüche 1 bis 8, das Mittel zum Befestigen (14) am Motorträger umfasst.

10. Strukturteil nach einem der Ansprüche 1 bis 9, das als Auflage für einen unteren Stoßdämpfer dienen kann, der zur Verarbeitung eines Zusammenpralls mit einem Fußgänger und/oder einem Aufprall vom "Versicherungstyp" vorgesehen ist, wobei es insbesondere die Auflageplatte eines Dämpfers umfasst.

11. Strukturteil nach einem der Ansprüche 1 bis 10, das funktionelle Elemente in sich vereint, z.B. thermische, akustische oder chemische Isolierungen, Mittel zum Abhalten von Split, eine Zugangsklappe zum Motor, einen Luftkanal, eine untere Luftaustrittsdüse, ein Aufnahmeabteil für die Bremsverkabelung.

12. Anordnung eines Strukturteils nach einem der vorangehenden Ansprüche aus einem unteren Stoßdämpfer, der zwei Crash-Boxen (34) umfasst, die an den Platten (18) anliegen, an denen sie mit Befestigungsmitteln befestigt sind, und einem Absorptions-Querträger (33), der auf jeder der Crash-Boxen (34) aufliegt, wobei das Strukturteil als Auflage für den unteren Stoßdämpfer dient.
